Europäisches Patentamt

**European Patent Office**

Office européen des brevets

(11) Numéro de publication : **0 018 274**
**B1**

(12) **FASCICULE DE BREVET EUROPÉEN**

(45) Date de publication du fascicule du brevet :
14.09.83

(51) Int. Cl.³ : **B 60 N   1/06, B 60 N   1/02**

(21) Numéro de dépôt : **80400484.4**

(22) Date de dépôt : **11.04.80**

(54) Support réglable pour siège et notamment pour siège de véhicule automobile.

(30) Priorité : **12.04.79 FR 7909371**

(43) Date de publication de la demande :
**29.10.80 Bulletin 80/22**

(45) Mention de la délivrance du brevet :
**14.09.83 Bulletin 83/37**

(84) Etats contractants désignés :
**DE GB NL SE**

(56) Documents cités :
**DE A 2 001 501**
**DE A 2 505 972**
**FR A 2 132 930**
**US A 2 929 439**
**US A 2 931 424**
**US A 3 001 756**
**US A 3 184 209**
**US A 4 015 812**
**US A 4 040 591**

(73) Titulaire : **CYCLES PEUGEOT Société dite:**
**Beaulieu**
**F-25700 Valentigney (FR)**

(72) Inventeur : **Fourrey, François**
**34 Rue du Petit Chenois**
**F-25200 Montbeliard (FR)**
Inventeur : **Mauffrey, Jean-François**
**8 Rue du Stade**
**F-90400 Andelnans (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Support réglable pour siège et notamment pour siège de véhicule automobile

Il est bien connu que les sièges de véhicules automobiles doivent pouvoir être réglés à la fois en hauteur, en inclinaison et longitudinalement, pour s'adapter aux données morphologiques de l'utilisateur et notamment du conducteur. Par ailleurs, il est apprécié des passagers du véhicule de pouvoir régler le siège lors d'un changement d'attitude, par exemple entre une attitude de repos et une attitude active.

En conséquence, de nombreux dispositifs ont été envisagés ou sont actuellement utilisés pour permettre le coulissement longitudinal des sièges, ainsi que leur réglage en hauteur et en inclinaison. Malheureusement beaucoup de ces dispositifs sont difficiles à manœuvrer car ils provoquent plusieurs déplacements simultanés et qu'en outre l'effort en cours de réglage est différent de l'effort appliqué pendant l'utilisation et/ou un effort de compensation, où un soulagement est nécessaire.

D'autres dispositifs sont munis de commandes distinctes pour les différents déplacements de l'assise du siège, mais sont encombrants car ils comportent des organes et notamment des organes transversaux de transmission du mouvement, qui rendent indisponible l'espace sous le siège, ce qui est un inconvénient majeur dans les véhicules de petites dimensions.

Pour remédier à cela, il a été proposé des dispositifs comportant deux groupes d'organes d'entraînement montés latéralement sous le siège et un système moteur placé à l'avant du support du siège. Des câbles ou analogues sont toutefois nécessaires sous le siège pour relier le moteur aux divers organes d'entraînement. Dans le brevet US-A-3 001 756 les deux groupes d'organes forment chacun un triangle déformable dont le côté inférieur est fixe, tandis que le côté supérieur constitue une glissière sur laquelle coulisse le coussin du siège. Par suite, tout déplacement d'avance ou de recul du siège provoque une modification de sa hauteur et inversement. En outre, l'action des moyens de commande n'est pas la même dans les différentes positions du siège, ce qui rend le réglage difficile en obligeant à une rectification après chaque déplacement.

Par ailleurs, un problème supplémentaire est posé par la nécessité pour les sièges modernes de véhicule automobile de permettre la fixation d'une attache de ceinture de sécurité, mobile avec le siège même.

La présente invention a pour but de remédier à ces inconvénients en réalisant un support réglable qui, à la fois, permette un déplacement précis rigoureusement indépendant des différentes parties du siège, sans nécessiter d'effort de soulagement, n'exige qu'un emplacement réduit et laisse libre un espace important sous le siège tout en ayant un prix de revient relativement faible.

Par rapport au brevet US-A-3 001 756 qui décrit déjà un support réglable pour siège, notamment siège de véhicule automobile, comportant un châssis coulissant dans deux glissières latérales ; un triangle déformable, sensiblement dans le plan vertical de chacune des glissières, qui comporte un côté avant de longueur variable, entre un sommet inférieur fixe et un sommet supérieur mobile, et un second sommet mobile à l'extrémité arrière du châssis, et un système moteur monté entre les triangles déformables et relié aux sommets mobiles par l'intermédiaire de renvois d'angle et de systèmes à vis, l'invention est caractérisée en ce que, dans le but d'obtenir notamment une indépendance totale des réglages des différentes parties du siège, le châssis coulissant a en plan la forme d'un U couché dont les branches coulissent dans des glissières fixées au sol et supportent chacune un triangle déformable fixé par son bras supérieur au coussin du siège et déplacé en translation, parallèlement à lui-même, avec le châssis, et dont la base supporte, sous l'avant du siège, le système moteur et des renvois d'angle qui relient ce système au sommet arrière mobile de chaque triangle par l'intermédiaire d'une vis sensiblement horizontale, mobile en translation, une tringlerie associée à des moyens de guidage transformant le déplacement horizontal de la vis en un déplacement vertical du sommet mobile.

Un tel support ayant dans son ensemble une forme en U, dont la base est située à l'avant du siège, laisse totalement libre l'espace situé à l'intérieur de ce U sous le siège, qui n'est traversé par aucun organe, ni rigide ni flexible.

Ce châssis étant mobile et portant les triangles déformables, qui peuvent ainsi être déplacés parallèlement à eux-mêmes sans déformation, le réglage de l'avance du siège est totalement indépendant de la position du coussin.

Par ailleurs, la combinaison de l'ensemble déformable triangulaire dont le sommet mobile arrière pivote par rapport à un point fixe avant, avec la commande par vis mobile axialement et renvoi d'angle pivotant, permet au sommet mobile arrière de se déplacer selon une direction sensiblement perpendiculaire au châssis, c'est-à-dire sans modifier l'inclinaison d'un dossier porté par cette partie du siège.

Selon un mode de réalisation préféré, le support comporte également un bras de fixation du dossier, articulé sur le sommet mobile du triangle opposé au côté de longueur variable et relié au système moteur par l'intermédiaire d'un renvoi d'angle pivotant porté par la base du châssis et d'une vis de commande mobile axialement dans ce renvoi. En position normale du dossier, la déformation du triangle déplace ce dossier pratiquement parallèlement à lui-même. Dans les autres positions l'inclinaison du dossier ne varie que d'un angle extrêmement faible, pratiquement imperceptible pour l'usager.

En outre, l'inclisaison du dossier est réglée à partir du châssis lui-même, et par rapport à celui-ci, indépendamment de celle de l'assise.

Selon une autre caractéristique de l'invention, une lumière verticale est ménagée dans une ferrure solidaire de la partie arrière du châssis et coopère avec un ergot solidaire du bras inférieur du triangle. Un ancrage de ceinture de sécurité peut être fixé sur cet ergot de sorte qu'il se déplace avec le sommet arrière du triangle déformable c'est-à-dire avec l'arrière du siège.

Le siège permet ainsi à l'usager tous les réglages désirés et répond aux exigences concernant la fixation de la ceinture de sécurité.

La description ci-dessous d'un mode de réalisation donné à titre d'exemple non limitatif, et représenté aux dessins annexés, fera ressortir les avantages et caractéristiques de l'invention.

Sur ces dessins :

la figure 1 est une vue en perspective d'un support réglable pour siège de véhicule automobile, selon l'invention ;

la figure 2 est une vue partielle à plus grande échelle, montrant la liaison entre le système moteur et les différentes commandes ;

la figure 3 est une vue de face, avec arrachement partiel, d'un renvoi d'angle ;

les figures 4, 5 et 6 sont des vues schématiques du triangle déformable lors du soulèvement, respectivement de l'avant du siège, de l'arrière du siège, et de l'ensemble du coussin ;

les figures 7 et 8 sont des vues schématiques du support réglable en position normale du dossier et en position inclinée vers l'arrière de ce même dossier ;

la figure 9 montre, en plan, un renvoi d'angle ouvert.

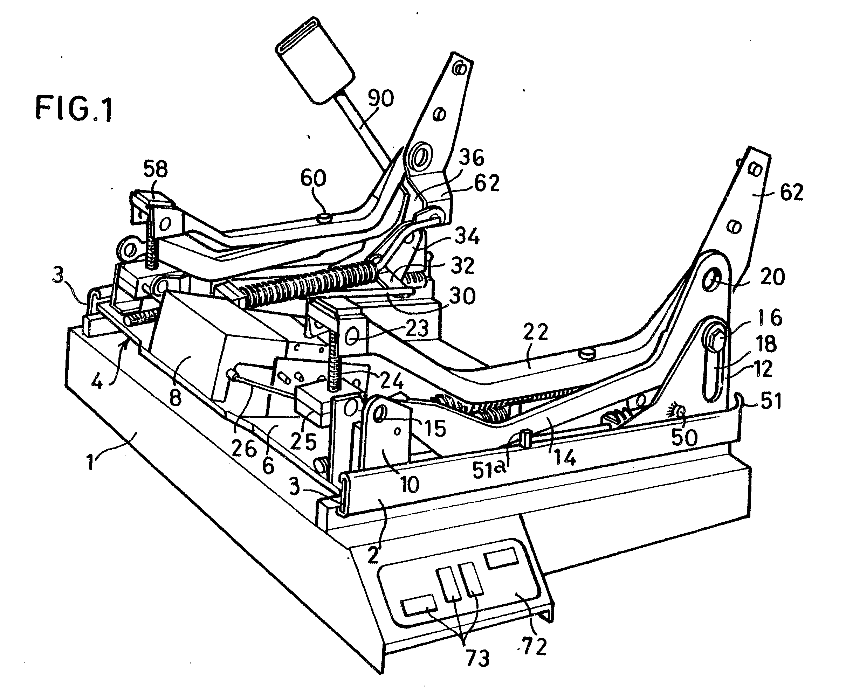

Comme le montrent les dessins, et tout particulièrement la figure 1, le support réglable de l'invention est destiné à être monté, de la manière habituelle, sur le plancher du véhicule, par exemple sur un plancher formant un caisson 1 en U autour d'un espace libre. Sur chaque côté de ce caisson est montée une glissière de section en C, 2, dans laquelle se déplace un coulisseau 3 porté par l'une des branches latérales d'un châssis en U 4. La base du U est formée par une traverse 6 qui supporte, dans sa partie centrale, un système moteur 8.

De part et d'autre de ce moteur 8, chaque coulisseau 3 solidaire d'une ferrure avant 10 et d'une ferrure arrière 12 qui supportent les extrémités d'un bras inférieur 14, qui est articulé en 15 sur la ferrure avant 10 tandis qu'il est recourbé vers le haut, à sa partie arrière, et est muni au droit de son coude d'un ergot 16 coulissant avec jeu dans une lumière sensiblement verticale 18 de la ferrure arrière 12.

Ce bras inférieur 14 est articulé à son extrémité supérieure en 20 sur un second bras 22 de support de coussin de siège. L'extrémité du bras 22 opposée à l'articulation 20 est articulée en 23 sur une tige filetée de commande 24, immobilisée en rotation mais mobile en translation dans un écrou rotatif faisant partie d'un réducteur 25 entraîné, par l'intermédiaire d'une transmission à cardan 26, par le système moteur 8. Les bras 14 et 22 forment ainsi un triangle déformable dont le côté, délimité par l'articulation 15 et l'articulation 23, a une longueur qui varie lors du déplacement de la vis 24 dans le réducteur 25, c'est-à-dire lors du déplacement du bras 22 par rapport au bras 14. A l'extrémité opposée, l'articulation 20, qui constitue le sommet du triangle déformable opposé à ce côté de longueur variable, est mobile par rapport à la ferrure 12 avec l'ergot 16 qui se déplace dans la lumière 18.

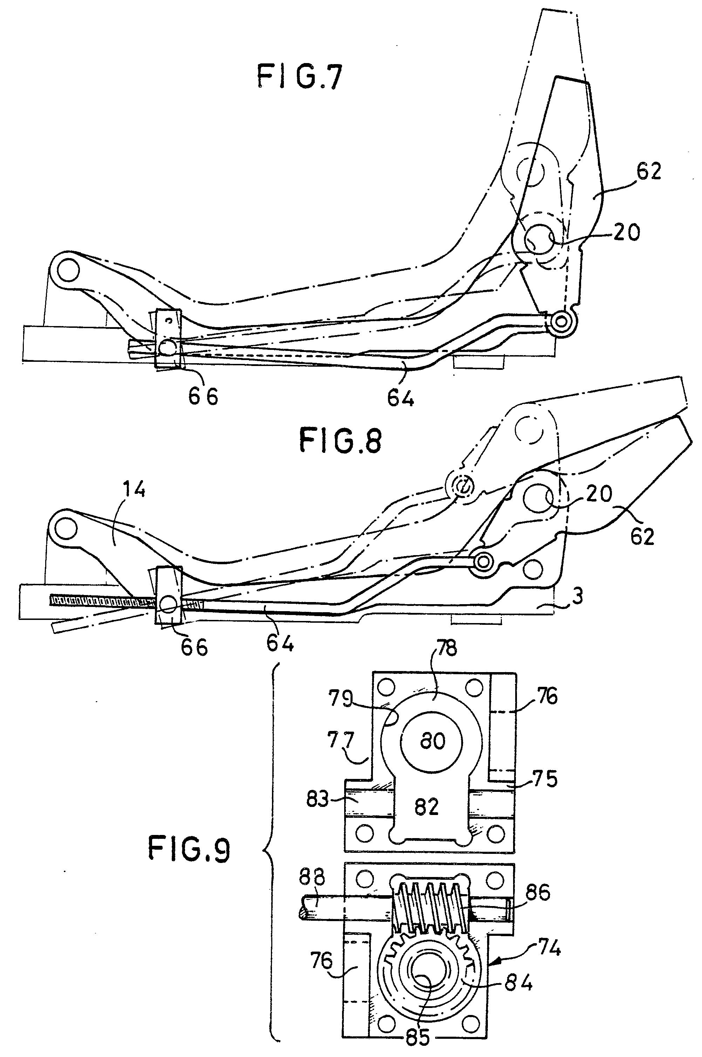

Ce déplacement est commandé également à partir du système moteur 8 qui est relié, par une transmission à la cardan analogue à la transmission 26, à un second réducteur 28 de commande du déplacement d'une tige filetée 30 immobilisée en rotation par une patte 32 (fig. 5) fixée sur elle et articulée sur une plaque triangulaire 34 montée pivotante en 35 sur le coulisseau 3. Le troisième sommet de la plaque triangulaire 34 est articulé sur une patte 36 fixée sur l'articulation 20 des deux bras 14 et 22.

Comme le montre la figure 5, le déplacement de la tige 30, commandée par le réducteur 38, provoque le pivotement de la plaque 34 autour de l'axe 35, par exemple comme indiqué en trait interrompu sur la figure 5, vers l'avant du support. Dans ce pivotement la plaque 34 repousse la patte 36 vers le haut, ce qui soulève l'ensemble de l'articulation 20 jusqu'à sa position supérieure qui correspond au point où l'ergot 16 se trouve à l'extrémité la plus haute de la lumière 18. Bien entendu le déplacement en sens inverse de la tige 30 fait redescendre la patte 36 et la plaque 34 jusqu'à la position basse représentée en trait plein sur la figure 5.

Le support est réalisé de manière rigoureusement symétrique. En effet, chacun des triangles déformables 14, 22 est relié à deux réducteurs 25 et 28, entraînés par le système moteur 8.

De préférence ce système moteur comporte plusieurs petits moteurs électriques qui commandent, chacun, l'un des mouvements du support. Par exemple, un premier moteur provoque le mouvement des deux transmissions 26 reliées aux deux réducteurs 25 et commande ainsi le déplacement sensiblement vertical des deux tiges 24 vers le haut ou vers le bas. De la même manière, un second moteur est relié aux deux réducteurs 28 et provoque le déplacement sensiblement vertical des leviers 14, et tout particulièrement des articulations 20.

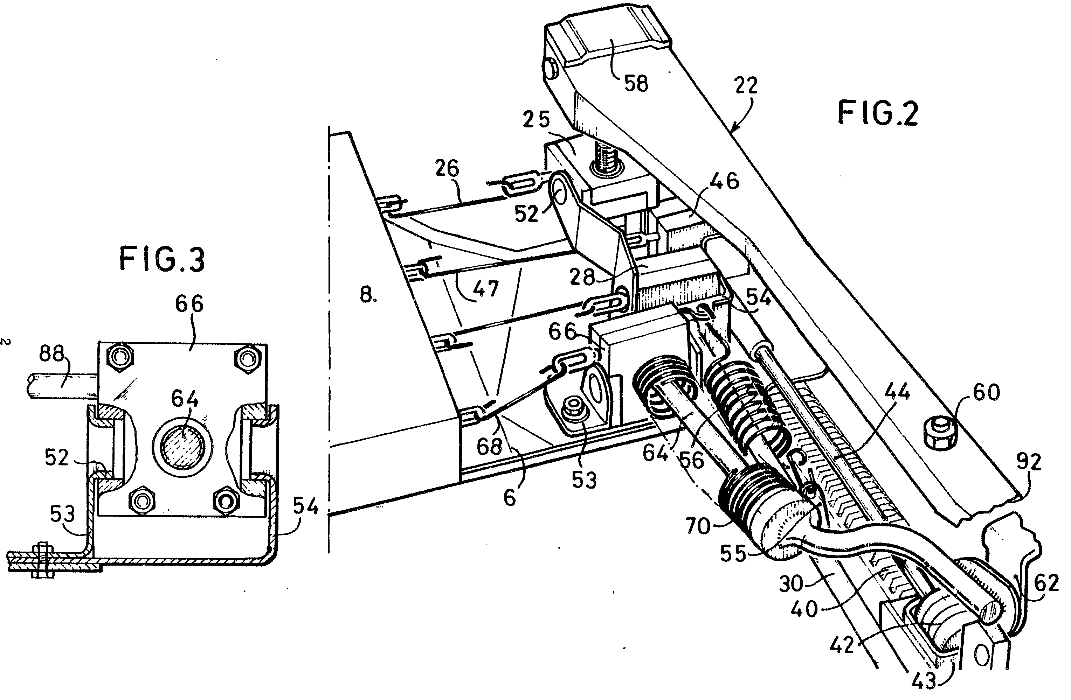

Par ailleurs chacune des glissières 2 est solidaire d'une crémaillère 40 (fig. 2) qui est en prise avec une vis sans fin 42, immobilisée en translation dans une chape en U 43, solidaire du coulisseau 3. Cette vis 42 est reliée par une tige 44 à un réducteur 46 entraîné, par une transmission à la cardan 47, par le système moteur 8, le réducteur 46, comme les réducteurs 25 et 28, formant également renvoi d'angle.

La rotation des tiges 44 et des vis 42 provoque le déplacement de l'ensemble du châssis 4 le long des crémaillères 40, entre une position avant et une position arrière dans lesquelles un ergot 50, solidaire de la ferrure arrière 12, est appliqué contre une butée 51a ou 51 portée par la glissière 2. Le support peut ainsi être placé dans toute position intermédiaire choisie par l'utilisateur. Quelle que soit cette position, tout effort exercé sur la crémaillère 40 est transmis uniquement à la chape 43 et au coulisseau et n'atteint pratiquement pas le réducteur 46 et son support, ni le système moteur.

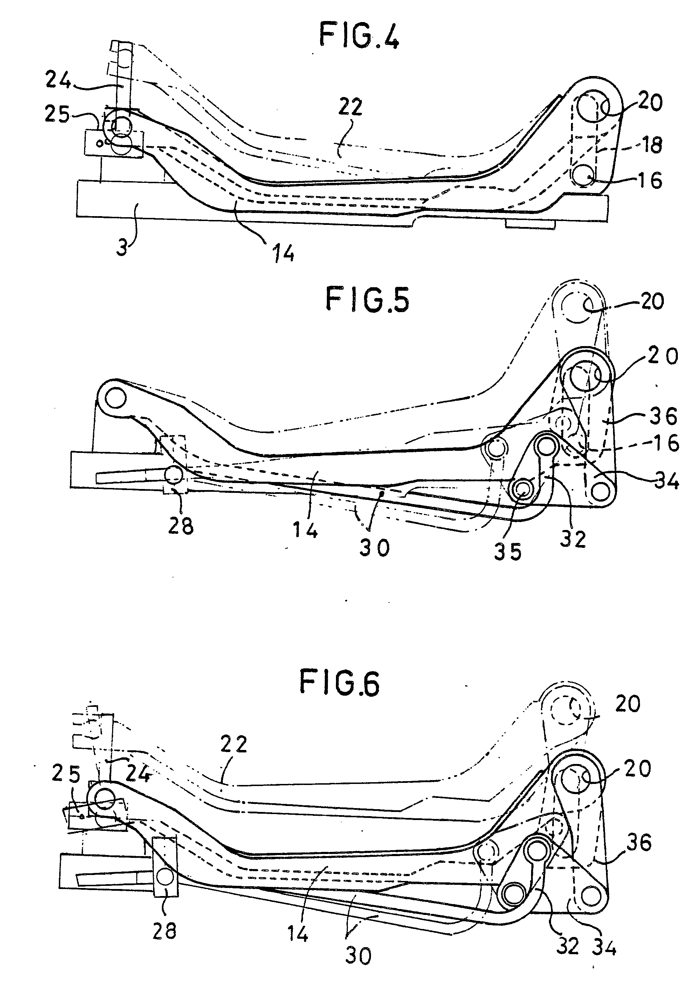

La hauteur de l'avant du coussin est réglée par le déplacement de la tige 24 soulevant le bras supérieur 22, comme le montre la figure 4, entre sa position basse représentée en trait plein sur cette figure et une position haute représentée en trait mixte. Ce soulèvement du bras 22 s'effectue par un pivotement autour de l'axe d'articulation 20, de sorte que la tige 24 s'incline légèrement par rapport à la verticale, au cours de son déplacement en translation.

Pour faciliter ce mouvement et accroître sa souplesse, le réducteur 25 est monté pivotant ·autour d'un axe perpendiculaire à la tige 24 qui, dans un mode de réalisation préféré, est matérialisé par des canons 52 formés par emboutissage dans des ferrures 53 ou 54 de support du réducteur, qui sont elles mêmes fixées sur la traverse 6 (fig. 3). De la même manière, le réducteur 28 est monté pivotant autour d'un axe perpendiculaire à la tige 30, de sorte que cette tige non seulement se déplace parallèlement à son axe, mais également peut pivoter lors de ce déplacement avec le réducteur 28. Ceci permet à l'articulation 20 d'être déplacée dans une direction sensiblement verticale, en étant maintenue latéralement par l'ergot 16 et la lumière 18.

De préférence, un ressort de traction 56 de type hélicoïdal est monté coaxialement à la tige 30 et fixé, d'une part sur la ferrure 54 de support de ce réducteur, et d'autre part, par une patte 55 sur la tige 30 elle-même. Ce ressort tend à soulever le siège et ainsi soulage le système de commande et permet l'emploi d'un moteur plus faible.

Grâce à l'utilisation du triangle déformable 14, 22, l'ensemble des efforts de maintien du siège est supporté par le support lui-même, de sorte que le coussin peut être réalisé de manière simple et légère. Il n'a pas à contribuer à la résistance de l'ensemble.

De préférence, le bras supérieur 22 est replié vers le haut à son extrémité avant et à son extrémité arrière et le coussin de siège est fixé au moins à l'avant, au-dessus de l'articulation 23, en 58, et en un point intermédiaire 60.

Bien entendu le support comporte également des bras 62 de maintien du dossier, pivotant autour de l'articulation 20 des bras 14 et 22. Chacun des bras 62 est solidaire d'une tige 64 dont une partie au moins est filetée et qui coopère avec un écrou faisant partie d'un réducteur-renvoi d'angle 66 monté pivotant autour d'un axe perpendiculaire à la tige 64 et matérialisé, comme les précédents, par deux canons 52. Chacun des réducteurs 66 est relié par une transmission 68 au système moteur 8. Un ressort hélicoïdal de compression 70 est monté entre le réducteur 66 et un point fixe de la tige 64. Il tend à redresser le dossier vers l'avant et permet ainsi l'utilisation d'un moteur de faible puissance bien que, comme le soulèvement du coussin, le réglage de l'inclinaison du dossier puisse être effectué sans nécessiter un effort de la personne assise, et même en l'absence de celle-ci.

Comme le montrent les figures 7 et 8, la commande constituée par le réducteur 66 et la tige 64 provoque le pivotement du bras 62 autour de l'articulation 20, de façon à régler l'inclinaison du dossier. Lorsque la tige 64 est déplacée jusqu'à sa position arrière, le bras 62 est redressé et est sensiblement vertical (fig. 7). Au contraire le déplacement de la tige 64 vers l'avant du support provoque l'inclinaison du bras 62 et tend à placer le dossier en position horizontale.

Lorsque le dossier est en position sensiblement verticale, qui est la position la plus généralement utilisée, le soulèvement de l'articulation 20, c'est-à-dire le pivotement du bras 14 autour de son articulation 15, déplace le bras 62 sensiblement parallèlement à lui-même, de sorte que la position du dossier reste pratiquement inchangée. Il en est bien entendu de même lorsque l'on agit sur la tige filetée 24 pour soulever le bras 22 et l'avant du coussin de siège. Ceci apparaît clairement à la figure 7 sur laquelle est indiquée, en trait plein, la position basse du coussin et du dossier redressé, et en trait interrompu la position haute de ces mêmes organes. On constate ainsi que le conducteur utilisant généralement le dossier dans une position sensiblement redressée, la distance entre les épaules de ce conducteur et le volant reste pratiquement constante, quelle que soit la position du coussin.

Lorsque le bras 62 a pivoté vers l'arrière, le soulèvement de l'articulation 20 entre la position représentée en trait plein sur la figure 8 et la position représentée en trait interrompu sur la même figure modifie légèrement l'inclinaison du bras 62 mais, grâce au pivotement du réducteur 66 autour des canons 52, la variation d'inclinaison est relativement faible, même dans cette position extrême du dossier.

Les figures 7 et 8 indiquent seulement la variation de position lors du soulèvement de l'arrière du coussin, c'est-à-dire de l'articulation 20, mais il est bien évident que la réaction sur le dossier du soulèvement simultané de l'avant du coussin, c'est-à-dire du bras 22, ne modifie pas la variation de position des bras 62. Le soulèvement de l'avant seul des bras 22 ne change pas du tout l'inclinaison du dossier.

Le système moteur 8, ou de préférence chacun des quatre moteurs qui le constituent, est relié à des boutons de commande portés par un tableau 72 qui peut être placé sur le côté du siège, ou en tout autre emplacement approprié du véhicule. Les quatre boutons 73 de ce tableau provoquent indépendamment chacun des déplacements du support, respectivement la translation du châssis 4 dans les glissières 2, le soulèvement de l'avant du coussin, celui de l'arrière du coussin, et l'inclinaison du dossier. Bien entendu plusieurs boutons peuvent être actionnés simultanément, par exemple pour provoquer le soulèvement du coussin à la fois à l'avant et à l'arrière. Dans certains cas ces deux derniers déplacements peuvent même être commandés par un même bouton relié aux deux moteurs. On obtient ainsi des réglages extrêmement précis dans toutes les directions désirées, ce qui permet une variation très progressive des positions du siège.

Ce résultat est obtenu en utilisant des organes simples et de coût relativement faible. Par exemple, les réducteurs 25, 28, 66 sont, dans un mode de réalisation préféré, réalisés de manière identique, comme le montre la figure 9, au moyen d'un boîtier formé par deux coquilles identiques 74 et 75 munies chacune d'une aile latérale en saillie 76 et d'un évidement 77 de forme correspondante, situés en des emplacements symétriques par rapport à l'axe médian d'une cavité centrale 78. La cavité centrale 78 comporte une partie cylindrique 79 percée d'une ouverture coaxiale 80 et prolongée par une portion sensiblement ·rectangulaire 82, dans laquelle débouchent deux évidements semi-cylindriques 83, perpendiculaires à l'axe de l'ouverture 80.

Les deux cavités 78 servent de logement à un pignon 84 percé axialement d'un trou taraudé 85, qui se trouve ainsi coaxial avec les ouvertures 80. Le pignon 84 est en prise avec une vis sans fin 86 portée par une tige 88 tournant dans les paliers formés par les évidements semi-cylindriques 83.

La tige 88 est reliée au système à cardan 26 ou 68 entraîné par le moteur électrique, tandis que le trou taraudé central du pignon 84 forme un écrou d'entraînement de la vis 30, 64 ou 24 de commande du mouvement correspondant. Chacune des ailes 76 est percée d'une ouverture circulaire dans laquelle pénètre le canon 52 de support du réducteur. Ainsi, chacun des réducteurs joue le rôle de renvoi d'angle pour la transmission, par vis et écrou, de commande du déplacement. Chaque réducteur permet donc une réduction importante d'encombrement de chaque côté du support.

Les réducteurs 46 sont réalisés de manière semblable, la seule différence étant que leur pignon 84 ne forme pas écrou mais est rendu solidaire de la tige 44, par exemple par clavetage.

Une telle disposition supprime toute nécessité de barre de torsion, ou autre organe transversal, entre les deux branches du U formé par le support. Le seul élément transversal est constitué par le support 6 du système moteur 8 et se trouve à l'avant du siège. En conséquence l'espace interne du U reste entièrement disponible, par exemple pour permettre à un passager arrière de disposer de plus de place, ce qui est un avantage important sur les véhicules automobiles de type européen dans lesquels le support de siège doit présenter un encombrement réduit.

On constate par ailleurs que le support qui vient d'être décrit ne gêne pas le passage des conduits de climatisation et peut facilement être monté au-dessus de ceux-ci. Eventuellement un premier étage de réduction peut être prévu sur le système moteur 8.

Par ailleurs la commande des différents mouvements peut être mémorisée de façon à permettre à l'utilisateur de retrouver automatiquement la position préférée qu'il a déterminée. Une telle mémorisation est facilitée par l'utilisation de plusieurs moteurs indépendants, un pour chaque mouvement. Ces moteurs, qui n'ont besoin que d'une faible puissance, peuvent d'ailleurs être obtenus à un coût nettement plus faible qu'un moteur unique accompagné d'embrayages correspondant à chacun des mouvements.

De préférence, comme le montre la figure 1, un organe d'ancrage inférieur d'une ceinture de sécurité 90 est porté par l'un des bras 14, par exemple en étant fixé sur l'ergot 16, de sorte qu'il est déplacé en même temps que l'articulation 20 et qu'ainsi il se trouve toujours de la même manière à portée de la main de la personne assise sur le siège et permet le maintien du serrage de la ceinture malgré une modification de la position du siège.

Par ailleurs en cas d'accident une traction sur la ceinture, vers l'avant, qui tend à tirer le bras 14 et la plaque 34, exerce un effort sur le bord de la lumière 18 et provoque un basculement de la ferrure 12 qui a tendance à enfoncer la chape 43, et donc la vis 42, dans la crémaillère 40. La vis 42 est alors verrouillée dans sa position, ce qui interdit tout déplacement du siège.

Bien entendu le coussin du siège peut être simplement fixé sur le bras 22, à l'avant et dans sa partie médiane, en 58 et 60 respectivement, comme indiqué ci-dessus, mais il peut également envelopper la quasi-totalité des triangles déformables 14 et 22, tandis que le dossier est fixé sur les bras 62 et les recouvre. Dans tous les cas ce siège peut être léger, car le support réglable suffit pratiquement à résister aux efforts et le coussin lui-même n'a pas à jouer de rôle de structure.

Le bras 22 comporte de préférence une âme plate 92, dont les deux bords sont recourbés et dirigés vers le bas, et peut ainsi être abaissé jusqu'à entourer la tige 44. Le bras 14 est, lui, formé par un flasque vertical qui s'emboîte entre le bras 22 et les ferrures 10 et 12, de sorte qu'en position basse le triangle déformable n'occupe qu'une place minimale, les ressorts 56 et 70 étant décalés latéralement par rapport à ce triangle.

Des butées, non représentées, constituées par exemple par des goupilles traversant les vis de commande, limitent les déplacements verticaux de l'avant et de l'arrière du siège ainsi que l'inclinaison du dossier.

**Revendications**

1. Support réglable pour siège, notamment siège de véhicule automobile, comportant un châssis coulissant (4) dans deux glissières latérales (2) ; un triangle déformable, sensiblement dans le plan vertical de chacune des glissières, qui comporte un côté avant (24) de longueur variable, entre un sommet inférieur fixe (15) et un sommet supérieur mobile (23), et un second sommet mobile (20) à l'extrémité arrière du châssis, et un système moteur (8) monté entre les triangles déformables et relié aux sommets mobiles par l'intermédiaire de renvois d'angle et de systèmes à vis, caractérisé en ce que, dans le but d'obtenir notamment une indépendance totale des réglages des différentes parties du siège, le châssis coulissant (4) a en plan la forme d'un U couché dont les branches (3) coulissent dans des glissières fixées au sol et supportent chacune un triangle déformable (14, 22, 24) fixé par son bras supérieur (22) au coussin du siège et déplacé en translation, parallèlement à lui-même, avec le châssis, et dont la base (6) supporte, sous l'avant du siège, le système moteur (8) et des renvois d'angle (28) qui relient ce système au sommet arrière mobile (20) de chaque triangle par l'intermédiaire d'une vis (30) sensiblement horizontale, mobile en translation, une tringlerie (32, 34-16, 18) associée à des moyens de guidage en un déplacement vertical du sommet mobile (20).

2. Support suivant la revendication 1, caractérisé en ce que le triangle déformable comportant deux bras (22, 14) pivotants à l'une de leurs extrémités (15, 23) et articulés entre eux à leur autre extrémité qui forme le second sommet mobile (20), un bras (62) de support du dossier est articulé sur l'axe d'articulation (20) des deux bras de chaque triangle déformable et est relié à l'extrémité d'une vis de commande (64), mobile en translation, qui traverse un renvoi d'angle (66) porté par la base (6) du U du châssis, ce bras (62) restant sensiblement parallèle à lui-même lors du déplacement vertical du sommet mobile ou de la translation du châssis.

3. Support suivant l'une des revendications 1 et 2, caractérisé en ce qu'il comporte une lumière verticale (18) ménagée dans une ferrure (12) solidaire de la partie arrière du châssis (4), et coopérant avec un ergot (16 solidaire du bras inférieur (14) du triangle.

4. Support suivant la revendication 3, caractérisé en ce qu'un ancrage inférieur (90) de ceinture de sécurité est fixé sur l'ergot (16) mobile dans la lumière verticale (18), de sorte qu'il se déplace avec l'articulation (20) des deux bras du triangle.

5. Support suivant l'une des revendications 1 à 4, caractérisé en ce qu'un ressort (56, 70) de compensation de l'effort exercé par l'utilisateur est monté entre le renvoi d'angle (28, 66) et un point fixe de la vis de commande (30, 64) traversant ce renvoi d'angle.

6. Support suivant l'une des revendications 1 à 5, caractérisé en ce que la tringlerie de transformation du déplacement horizontal parallèle à la branche du U en déplacement vertical, comporte une plaque triangulaire (34) pivotant autour d'un point fixe (35) du châssis et articulée, d'une part sur l'extrémité de la vis (64) mobile axialement, et d'autre part sur une biellette (36) solidaire du sommet (20) du triangle déformable opposé au côté de longueur variable, de sorte que le déplacement en translation de la vis (64), provoquant le pivotement de la plaque, déplace sensiblement verticalement ce sommet (20).

7. Support suivant l'une des revendications 1 à 6, caractérisé en ce que chaque renvoi d'angle (25, 28, 66) est réducteur et est enfermé dans un boîtier constitué par deux coquilles identiques (74, 75) emboîtées l'une dans l'autre et traversées toutes les deux par la vis de commande mobile en translation.

8. Support suivant l'une des revendications 1 à 7, caractérisé en ce que tous les renvois d'angle réducteurs (25, 28, 66) sont sensiblement identiques, et au moins deux d'entre eux sont montés pivotants sur un axe perpendiculaire à celui de la vis de commande.

9. Support suivant l'une des revendications 1 à 8, caractérisé en ce que les axes d'articulation des réducteurs sont constitués par des canons (52) emboutis dans l'organe de support et pénétrant dans une ouverture circulaire de l'organe supporté.

10. Support suivant l'une des revendications 1 à 9, caractérisé en ce que le système moteur (8) comprend quatre moteurs indépendants comportant chacun deux sorties reliées respectivement aux deux côtés du mécanisme.

11. Support suivant l'une des revendications 1 à 10, caractérisé en ce que chaque glissière latérale (2) est solidaire d'une crémaillère (40) en prise avec une vis sans fin (42) portée par une chape en U (43) fixée au châssis (4), à proximité de la lumière verticale (18), de sorte qu'un effort vers l'avant, exercé accidentellement sur cette lumière (18), est transmis à la chape qui le transforme en effort de compression pour le verrouillage de la vis sur la crémaillère.

**Claims**

1. An adjustable support for a seat, in particular a motor vehicle seat, comprising a frame (4) slidable in two lateral slideways (2) ; a deformable triangular structure, substantially in the vertical plane of each of the slideways, which comprises a front side (24) of variable length, between a fixed lower apex (15) and a movable upper apex (23), and a second movable apex (20) at the rear end of the frame, and a driving system (8) mounted between the deformable triangular structures and connected to the movable apices through counter-drive and screw systems, characterized in that, for the purpose of achieving in particular a complete independence of the adjustments of the various parts of the seat, the slidable frame (4) has in plan the shape of a U lying on its side whose branches (3) are slidable in the slideways fixed to the floor and each support a deformable triangular structure (14, 22, 24) which is fixed by its upper arm (22) to the cushion of the seat and displaced in translation, while remaining parallel to itself, with the frame, and whose base (6) supports, under the front of the seat, the driving system (8) and the counter-drive (28) which connect said system to the movable rear apex (20) of each triangular structure through a substantially horizontal screw (30) which is movable in translation, a linkage (32, 34-16, 18) associated with guide means converting the horizontal displacement of the screw into a vertical displacement of the movable apex (20).

2. A support according to claim 1, characterized in that the deformable triangular structure comprises two arms (22, 14) which are pivotal at one of their ends (15, 23) and articulated together at their other end which forms the second movable apex (20) ; an arm (22) for. supporting the backrest is pivotally mounted on the articulation pin (20) of the two arms of each deformable triangular structure and is connected to the end of a control screw (64) which is movable in translation and extends through a counter-drive means (66) carried by the base (5) of the U of the frame, this arm (62) remaining substantially parallel to itself upon the vertical displacement of the movable apex or the movement in translation of the frame.

3. A support according to claim 1 or 2, characterized in that it comprises a vertical aperture (18) formed in a member (12) rigid with the rear part of the frame (4) and cooperating with a pin (16) rigid with the lower arm (14) of the triangular structure.

4. A support according to claim 3, characterized in that a lower fastener (90) for a safety belt is fixed to the pin (16) movable in the vertical aperture (18), so that it is moved with the articulation (20) of the two arms of the triangular structure.

5. A support according to one of the claims 1 to 4, characterized in that a spring (56, 70) for compensating the force exerted by the user is mounted between the counter-drive means (28, 66) and a fixed point of the control screw (30, 64) extending through this counter-drive means.

6. A support according to one of the claims 1 to 5, characterized in that the linkage converting the horizontal displacement parallel to the branch of the U into a vertical displacement comprises a triangular plate (34) which is pivotable about a fixed point (35) of the frame and articulated, on one hand, on the end of the axially movable screw (64) and, on the other hand, on a link (36) connected to the apex (20) of the deformable triangular structure opposed to the side of variable length, so that the movement in translation of the screw (64), which causes the pivoting of the plate, displaces this apex (20) substantially vertically.

7. A support according to one of the claims 1 to 6, characterized in that each counter-drive means (25, 28, 66) is a reducing means and is enclosed in a case formed by two identical shells (74, 75) which are fitted one inside the other and have, extending through both shells, the control screw movable in translation.

8. A support according to one of the claims 1 to 7, characterized in that all the reducing counter-drive means (25, 28, 66) are substantially identical and at least two thereof are pivotally mounted on a pin perpendicular the axis of the control screw.

9. A support according to one of the claims 1 to 8, characterized in that the articulation axes of the reducers are formed by spigots (52) formed by a press operation in the support member and inserted in a circular opening of the supported member.

10. A support according to one of the claims 1 to 9, characterized in that the driving system (8) comprises four independent motors each having two outputs respectively connected to the two sides of the mechanism.

11. A support according to one of the claims 1 to 10, characterized in that each of the lateral slideways (2) is rigid with a rack (40) engaged with a worm (42) carried by a U-shaped member (43) fixed to the frame (4) in the vicinity of the vertical aperture (18) so that a force exerted in the forward direction accidentally on this aperture (18) is transmitted to the U-shaped member which converts it into a compressive force for locking the screw on the rack.

## Ansprüche

1. Verstellbares Gestell für Sitze, insbesondere Kraftfahrzeugsitze, mit einem in zwei seitlichen Gleitführungen (2) gleitenden Tragrahmen (4), jeweils einem im wesentlichen in der vertikalen Ebene jeder Gleitführung angeordneten, verformbaren Dreieck, das zwischen einer unteren feststehenden Ecke (15) und einer oberen beweglichen Ecke (23) eine vordere Seite (24) veränderlicher Länge und am hinteren Ende des Tragrahmens eine zweite. bewegliche Ecke (20) besitzt, und mit einer Motoreinheit (8), die zwischen den verformbaren Dreiecken montiert ist und mit den beweglichen Ecken durch Winkelgetriebe und Schraubengetriebe verbunden ist, dadurch gekennzeichnet, daß der verschiebbare Tragrahmen (4), insbesondere um voneinander vollständig unabhängige Verstellungen der einzelnen Sitzteile zu ermöglichen, in Draufsicht die Form eines liegenden U's hat, dessen Schenkel (3) in am Boden befestigten Gleitführungen gleiten und jeweils ein verformbares Dreieck (14, 22, 24) tragen, das mit seinem oberen Arm (22) am Sitzpolster befestigt ist und zusammen mit dem Tragrahmen parallelverschiebbar ist, und dessen Steg (6) unter dem vorderen Sitzteil die Motoreinheit (8) und Winkelgetriebe (28) trägt; die die Motoreinheit mit der hinteren beweglichen Ecke (20) jedes Dreiecks über eine im wesentlichen horizontale, verschiebbare Schraube (30) verbinden, wobei ein mit Führungseinrichtungen zusammenwirkendes Gestänge (32, 34-16, 18) die horizontale Bewegung der Schraube in eine vertikale Bewegung der beweglichen Ecke (20) umformt.

2. Gestell nach Anspruch 1, dadurch gekennzeichnet, daß das verformbare Dreieck zwei Arme (22, 14) aufweist, die an einem ihrer Enden (15, 23) verschwenkbar sind und an ihrem anderen, die zweite bewegliche Ecke (20) bildenden Ende aneinander angelenkt sind, und daß an der Gelenkachse (20) der beiden Arme jedes verformbaren Dreiecks ein die Rückenlehne tragender Arm (62) angelenkt ist, der mit dem Ende einer verschiebbaren Antriebsschraube (64) verbunden ist, die ein von dem Steg (6) des U-förmigen Tragrahmens getragenes Winkelgetriebe (66) durchquert, und der bei der vertikalen Bewegung der beweglichen Ecke oder bei der Verschiebung des Tragrahmens zu sich selbst im wesentlichen parallel bleibt.

3. Gestell nach einem der vorhergehenden Ansprüche, gekennzeichnet durch eine vertikale Aussparung (18), die in einem am hinteren Teil des Tragrahmens (4) befestigten Halter (12) vorgesehen ist und mit einem am unteren Arm (14) des Dreiecks befestigten Zapfen (16) zusammenwirkt.

4. Gestell nach Anspruch 3, dadurch gekennzeichnet, daß an dem in der vertikalen Aussparung (18) beweglichen Zapfen (16) ein unterer Sicherheitsgurthalter (90) befestigt ist, der sich mit dem Gelenk (20) der beiden Arme des Dreiecks mitbewegt.

5. Gestell nach einem der vorhergehenden Ansprüche, dadurch gekennzeichnet, daß zwischen dem Winkelgetriebe (28, 66) und einem festen Punkt der das Winkelgetriebe durchquerenden Antriebsschraube (30, 64) eine Feder (56, 70) zum Ausgleich der von dem Benutzer ausgeübten Kraft montiert ist.

6. Gestell nach einem der vorhergehenden Ansprüche, dadurch gekennzeichnet, daß das Gestänge zur Umformung der zu dem Schenkel des U-förmigen Tragrahmens parallelen, horizontalen Bewegung in eine vertikale Bewegung eine Dreiecksplatte (34) aufweist, die um einen festen Punkt (35) des Tragrahmens schwenkbar ist und einerseits an dem Ende der axial beweglichen Antriebsschraube (64) und andererseits an einem Arm (36) angelenkt ist, der an der der Seite mit veränderlicher Länge gegenüberliegenden Ecke (20) des verformbaren Dreiecks befestigt ist, so daß die Verschiebungsbewegung der Antriebsschraube (64), die die Verschwenkung der Dreiecksplatte bewirkt, eine im wesentlichen vertikale Bewegung der Ecke (20) verursacht.

7. Gestell nach einem der vorhergehenden Ansprüche, dadurch gekennzeichnet, daß jedes Winkelgetriebe (25, 28, 66) ein Untersetzungsgetriebe ist und von einem Gehäuse umschlossen ist, das aus zwei ineinandergreifenden Schalen (74, 75) gleicher Form besteht, die beide von der verschiebbaren Antriebsschraube durchsetzt sind.

8. Gestell nach einem der vorhergehenden Ansprüche, dadurch gekennzeichnet, daß alle untersetzenden Winkelgetriebe (25, 28, 66) im wesentlichen dieselbe Ausbildung haben, und daß mindestens zwei von ihnen auf einer zur Achse der Antriebsschraube senkrechten Achse schwenkbar montiert sind.

9. Gestell nach einem der vorhergehenden Ansprüche, dadurch gekennzeichnet, daß die Schwenkachsen der Untersetzungsgetriebe aus Buchsen (52) bestehen, die in dem tragenden Element durch Ziehen gebildet sind und in eine kreisförmige Öffnung des getragenen Elements eintreten.

10. Gestell nach einem der vorhergehenden Ansprüche, dadurch gekennzeichnet, daß die Motoreinheit (8) aus vier voneinander unabhängigen Motoren mit je zwei Ausgängen besteht, die jeweils mit einer der beiden Seiten des Mechanismus verbunden sind.

11. Gestell nach einem der vorhergehenden Ansprüche, dadurch gekennzeichnet, daß an jeder seitlichen Gleitführung (2) eine Zahnstange (40) befestigt ist, die mit einer Schnecke (42) kämmt, die von einer in Nähe der vertikalen Aussparung (18) an dem Tragrahmen (4) befestigten, U-förmigen Gabel (43) getragen ist, so daß eine zufällig auf die Aussparung ausgeübte, nach vorne gerichtete Kraft auf die Gabel übertragen wird und von ihr in eine Druckkraft umgeformt wird, die eine Verriegelung der Schnecke auf der Zahnstange bewirkt.

FIG.1

0 018 274

FIG.3

FIG.2

0 018 274

# FIG.4

# FIG.5

# FIG.6

# FIG.7

62

20

66

64

# FIG.8

14

20

62

3

66

64

# FIG.9

78

79

76

77

80

75

83

82

88

86

76

74

84

85

4